Europäisches Patentamt

European Patent Office

Office européen des brevets

(19)

(11) Numéro de publication: **0 310 513**
A1

## (12) DEMANDE DE BREVET EUROPEEN

(21) Numéro de dépôt: **88402464.7**

(22) Date de dépôt: **29.09.88**

(51) Int. Cl.⁴: **G 21 F 9/34**

(30) Priorité: **30.09.87 FR 8713514**

(43) Date de publication de la demande:
**05.04.89 Bulletin 89/14**

(84) Etats contractants désignés:
**AT BE CH DE ES FR GB IT LI NL SE**

(71) Demandeur: **TECHNICATOME Société Technique pour l'Energie Atomique**
**B.P. 17**
**F-91192 GIF SUR YVETTE CEDEX (FR)**

(72) Inventeur: **Pfertzel, Roger**
**50 Rue de Madrid**
**F-91190 Gif sur Yvette (FR)**

(74) Mandataire: **Mongrédien, André et al**
**c/o BREVATOME 25, rue de Ponthieu**
**F-75008 Paris (FR)**

(54) **Procédé de conditionnement de déchets dans des matières thermoplastiques à bas point de fusion.**

(57) L'invention a pour objet un procédé de conditionnement de déchets dans des matières thermoplastiques à bas point de fusion.

Ce procédé consiste à mélanger, par exemple par extrusion (en 1), à une température inférieure à 100°C, les déchets avec une résine thermoplastique ayant un point de ramollissement bille/anneau inférieur à 100°C de façon à obtenir un mélange visqueux, et à injecter sous pression ce mélange visqueux dans un conteneur de stockage (10).

La résine thermoplastique est de préférence un copolymère d'éthylène et d'acétate de vinyle contenant par exemple 28% en poids d'acétate de vinyle.

FIG. 1

EP 0 310 513 A1

Description

# PROCEDE DE CONDITIONNEMENT DE DECHETS DANS DES MATIERES THERMOPLASTIQUES A BAS POINT DE FUSION

La présente invention a pour objet un procédé de conditionnement de déchets, notamment de déchets radioactifs, par enrobage dans des matières thermoplastiques.

De façon plus précise, elle concerne un procédé de conditionnement permettant, d'une part, d'immobiliser les déchets dans une matière thermoplastique, et, d'autre part, d'introduire les déchets immobilisés dans un conteneur de stockage en remplissant la totalité du conteneur de façon à minimiser les volumes de déchets à stocker.

Ce procédé s'applique aux déchets solides constitués par des déchets technologiques faiblement radioactifs, en particulier des déchets en matière plastique, comme les gants, les bottes et les feuilles de matière thermoplastique, les déchets cellulosiques comme le coton et le papier, par exemple les filtres usagés qui ont été faiblement contaminés par suite d'une utilisation dans une centrale ou une usine nucléaire. Il s'applique également aux déchets constitués par des résines échangeuses d'ions de faible activité. Par faible activité ou contamination, on entend une activité ne dépassant pas $3,7.10^7$ Bq/m³ ($10^{-3}$Ci/m³), ce qui correspond à une irradiation gamma inférieure à $5.10^{-4}$ Gy/h (50 mrad /h) au contact des récipients.

On connaît par le brevet anglais GB-A-2 171 638 un procédé de traitement de déchets de ce type par enrobage dans une matière thermoplastique constituée par du polyéthylène ou du chlorure de polyvinyle. Selon ce brevet, les déchets radioactifs solides sont finement broyés, puis comprimés et solidifiés par extrusion à une température de 120 à 260°C, avec la matière thermoplastique, on obtient ainsi un boudin cylindrique que l'on tronçonne à la sortie de l'extrudeuse en pastilles ou en éléments, ayant par exemple un diamètre de 12mm. Lorsqu'on veut procéder au stockage final de ces éléments ou pastilles, on les introduit dans un conteneur de stockage mais il est nécessaire de les immobiliser dans ce conteneur au moyen d'un liant auxiliaire tel que du bitume ou du béton ou de les soumettre à un traitement complémentaire d'incinération ou de fusion. Dans le premier cas, le volume de déchets présent dans le conteneur de stockage ne peut représenter la totalité du volume du conteneur. Dans le deuxième cas, il est nécessaire d'effectuer des opérations complémentaires coûteuses. Le procédé décrit dans ce brevet nécessite donc de nombreuses étapes pour parvenir au stockage final puisqu'il est nécessaire de mélanger, d'extruder, puis de tronçonner et d'immobiliser les éléments obtenus lors du tronçonnage. Par ailleurs, étant donné les températures élevées utilisées, il se produit lors de l'opération d'extrusion de déchets humides ou de matières thermosensibles, des émanations parasites de vapeur d'eau ou de gaz provenant de la décomposition thermique de ces matières. Ces émanations peuvent se poursuivre un certain temps à la sortie de l'extrudeuse et il en résulte que les éléments obtenus à la sortie de l'extrudeuse présentent une porosité notable, et perdent ainsi en partie les caractéristiques requises pour réaliser un bon confinement des matières radioactives.

La présente invention a précisément pour objet un procédé de conditionnement de déchets qui permet d'éviter ces inconvénients.

Le procédé, selon l'invention, de conditionnement de déchets par enrobage dans une matière thermoplastique, comprend les étapes successives suivantes :

a) - mélange, à une température inférieure à 100°C, des déchets avec une résine thermoplastique ayant un point de ramollissement bille/anneau inférieur à 100°C de façon à obtenir un mélange visqueux, et

b) - injection sous pression du mélange visqueux obtenu dans un conteneur de stockage.

Dans ce procédé, l'utilisation d'une résine thermoplastique à bas point de fusion permet de ne pas atteindre une température de 100°C, tout en conservant une bonne plasticité pendant toute la durée du traitement, et d'éviter ainsi les inconvénients dus à la vaporisation de l'eau provenant des déchets ou à la libération de gaz résultant d'un début de décomposition thermique de certains déchets organiques.

Par ailleurs, l'utilisation d'une telle résine et la préparation par extrusion d'un mélange visqueux permettent de remplir complè tement le conteneur de stockage par injection sous pression, et de limiter ainsi les volumes de déchets à stocker.

De plus, le procédé de l'invention permet d'obtenir des débits de traitement de déchets relativement élevés, par exemple de l'ordre de 100 kg/h de déchets pour une machine dont le débit ne dépasserait pas 40 kg/h dans le procédé d'extrusion/ tronçonnage.

Selon l'invention, on peut utiliser tout type de résine thermoplastique ne réagissant pas avec les déchets, du moment qu'elle présente un point de ramollissement bille/anneau inférieur à 100°C, de préférence au plus égal à 80°C, par exemple 78°C. Ces résines thermoplastiques peuvent être en particulier des copolymè res d'éthylène et d'acétate de vinyle (EVA), par exemple un copolymè re d'éthylène et d'acétate de vinyle comprenant environ 28% en poids d'acétate de vinyle comme les produits commercialisés sous les marques EVATANE® 28.420 et 28.800 par ATOCHEM, qui présentent les caractéristiques suivantes:

| | EVA 28.420 | EVA 28.800 |
|---|---|---|
| Point de fusion (DSC) | 72°C | 71°C |
| Point de ramollissement bille-anneau | 80°C | 78°C |
| densité | 0,95 | 0,95 |
| melt index | 400 g/10min | 800 g/10min |
| viscosité à l'état fondu à 160°C à 180°C à 200°C | 46 Pa.S 29 Pa.S 20 Pa.S | 18,5 Pa.S 11 Pa.S 7 Pa.S |
| Résistance à la rupture | 2,5 MPa | 1,5 MPa |
| Allongement à la rupture | 700-1000% | 300% |
| Dureté shore A | 74 | |

Dans le procédé de l'invention, la quantité de déchets introduite dans le mélange visqueux dépend en particulier de la nature des déchets. Elle peut représenter jusqu'à 80% en poids du mélange de déchets et de résine thermoplastique. Toutefois, dans le cas où l'on conditionne des résines échangeuses d'ions humides en grains, on préfère utiliser une quantité de résine échangeuse d'ions ne représentant que 70% en poids du mélange. En revanche, lorsqu'il s'agit de déchets technologiques, tels que du coton, du papier, des gants, des bottes ou des articles en polyéthylène ou en polychlorure de vinyle, la quantité introduite dans le mélange peut être de 80% en poids. Dans ce cas, on broie tout d'abord les déchets solides pour les transformer en particules que l'on mélange ensuite avec la résine.

Selon une variante de mise en oeuvre du procédé de l'invention, on peut conditionner simultanément au moyen de la résine thermoplastique des résines échangeuses d'ions radioactives et des boues et/ou concentrats liquides radioactifs. Dans ce cas, on soumet tout d'abord les particules de résines échangeuses d'ions humides à un séchage pour les déshydrater sans détruire leur aptitude à absorber de l'eau. On mélange ensuite ces particules de résine échangeuse d'ions séchées qui sont capables d'absorber de l'eau avec les boues et/ou les concentrats liquides radioactifs et la résine thermoplastique, en opérant comme précédemment à une température inférieure à 100°C de façon à obtenir un mélange visqueux. On injecte ensuite sous pression le mélange visqueux obtenu dans un conteneur de stockage. Dans ce cas, les particules de résines échangeuses d'ions séchées absorbent l'humidité provenant des boues et des concentrats liquides radioactifs et l'on peut obtenir un mélange présentant les caractéristiques requises pour le stockage final.

Généralement, la quantité en poids de boues et/ou de concentrats liquides radioactifs introduits dans le mélange est au plus égale à la quantité en poids de particules de résines échangeuses d'ions séchées.

Ainsi, le procédé de l'invention présente encore l'avantage de permettre le traitement simultané de déchets solides et liquides, et l'enrobage de déchets humides, ce qui ne pouvait être obtenu avec le procédé de l'art antérieur.

Le procédé de l'invention peut être mis en oeuvre dans tout appareillage classique de mélange. De préférence, on réalise le mélange par extrusion en utilisant une extrudeuse à deux vis classique.

D'autres caractéristiques et avantages de l'invention apparaîtront mieux à la lecture de la description qui suit se référant au dessin annexé sur lequel :
   - la figure 1 représente schématiquement en coupe verticale une installation d'extrusion pour la mise en oeuvre du procédé de l'invention,
   - la figure 2 représente en coupe verticale une installation pour mettre en oeuvre le procédé de l'invention avec des déchets technologiques soumis à un broyage préalable, et
   - la figure 3 représente schématiquement en coupe verticale une autre installation pour mettre en oeuvre le procédé de l'invention avec des résines échangeuses d'ions.

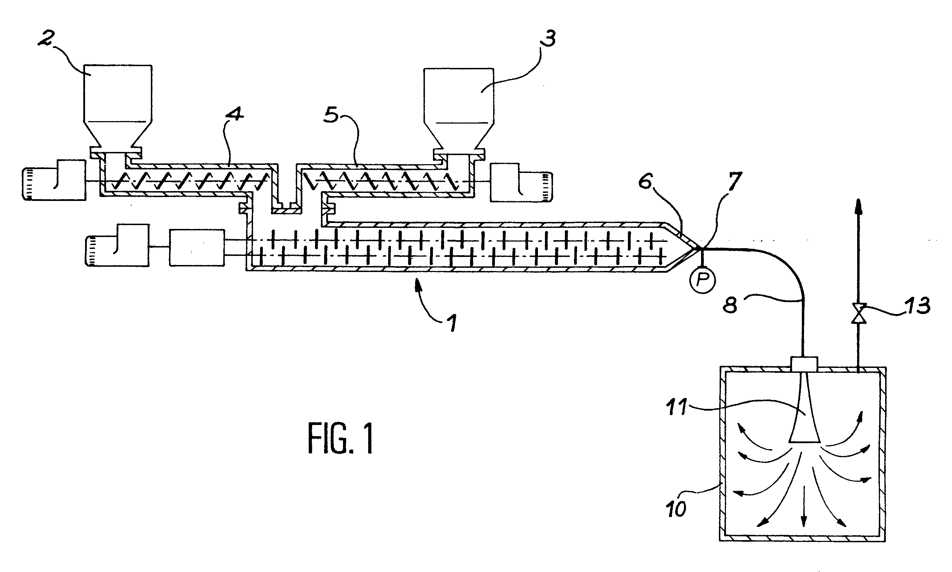

Sur la figure 1, on voit que l'installation comprend un réacteur de mélange 1 constitué par une extrudeuse à deux vis classique utilisée en plasturgie. Des trémies 2 et 3 équipées respectivement de distributeurs-doseurs 4 et 5 permettent d'introduire à l'entrée de l'extrudeuse la matière thermoplastique, par exemple le copolymère d'éthylène et d'acétate de vinyle provenant de la trémie 2, et les déchets en particules provenant de la trémie 3. A la sortie de l'extrudeuse, un convergent 6 terminé par un orifice cylindrique 7 permet de refouler le mélange visqueux obtenu dans un tube flexible 8 raccordé à un conteneur de stockage 10. Ce conteneur est muni d'un tube perdu 11 de forme divergente et d'une soupape 13 permettant de limiter la pression dans le conteneur 10.

Dans cette installation, on introduit donc le copolymère d'éthylène et d'acétate de vinyle stocké dans la trémie 2 et les déchets en particules stockés dans la trémie 3 dans l'extrudeuse 1 qui est chauffée à une température maintenue au voisinage de 90°C par un système automatique de chauffage et de refroidissement. On recueille ainsi à la sortie de l'extrudeuse un mélange visqueux. Sous l'effet de la légère pression (0,12 à 0,15 MPa) régnant dans le conteneur, la matière injectée s'étale par le divergent 11 en remplissant progressivement tout le conteneur 10. La matière injectée crée une contre-pression croissante en fonction du remplissage. Lorsque la pression P à la sortie de l'extrudeuse atteint un seuil caractéristique de la forme du conteneur et de la plasticité du mélange visqueux, on diminue le débit d'introduction des déchets dans l'extrudeuse pour augmenter la fluidité du mélange et achever ainsi le remplissage du conteneur 10. Ceci permet par ailleurs d'arrêter l'extrudeuse sans risque de bourrage lors du changement de conteneur.

On obtient ainsi un conteneur 10 totalement rempli qui est conforme à la réglementation en vigueur des centres de stockage en surface.

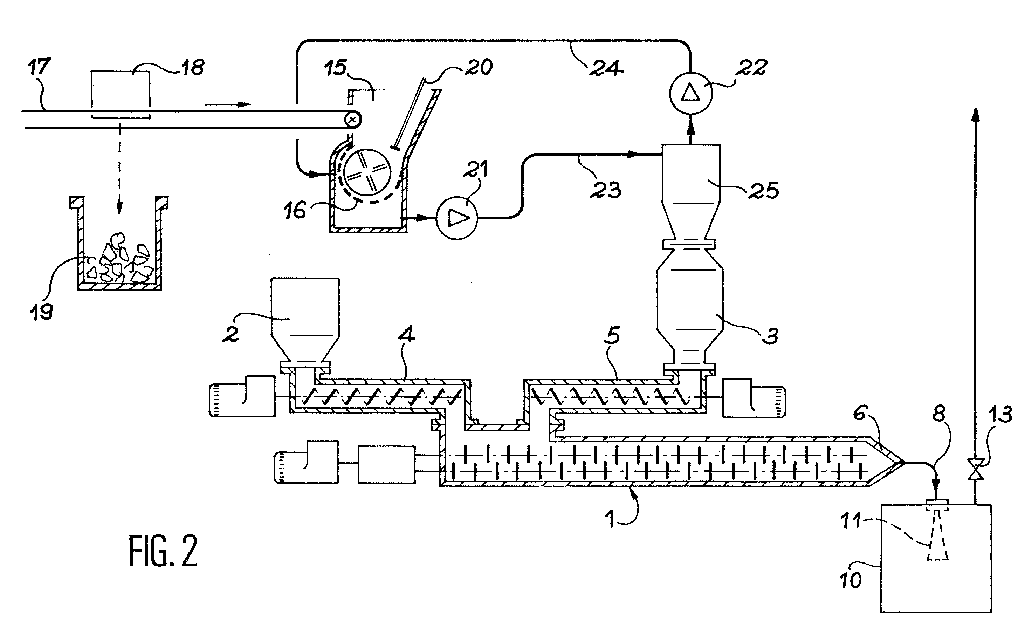

Sur la figure 2, on a représenté une installation dans laquelle on soumet tout d'abord les déchets technologiques à un broyage.

Sur cette figure, on a repris les mêmes références pour désigner les éléments communs aux deux installations. Ainsi, cette installation comprend comme la précédente une extrudeuse à double vis 1, une trémie d'alimentation 2 en résine thermoplastique, c'est-à-dire en copolymère d'éthylène et d'acétate de vinyle, une trémie 3 d'alimentation en déchets solides broyés, un convergent 6 pour la sortie du mélange et son introduction dans le conteneur 10 par l'intermédiaire du tube souple 8 et du divergent 11. Les déchets solides sont broyés dans le broyeur 15 qui est équipé d'une grille 16 permettant de calibrer les particules résultant du broyage. Le broyeur est alimenté en déchets au moyen d'un transporteur à bande 17 sur lequel est placé un tunnel 18 de détection des pièces métalliques. Ces pièces sont séparées manuellement et placées dans un conteneur vide 19. Un poussoir 20 permet d'éviter la formation de voutes à l'entrée du broyeur.

Les particules calibrées sont aspirées à travers la grille 16 par le ventilateur 21 et refoulées jusqu'au séparateur-cyclone 25 où elles sont séparées de l'air et tombent dans la trémie 3, l'air est repris par le ventilateur 22 et réintroduit dans le broyeur par la canalisation 24.

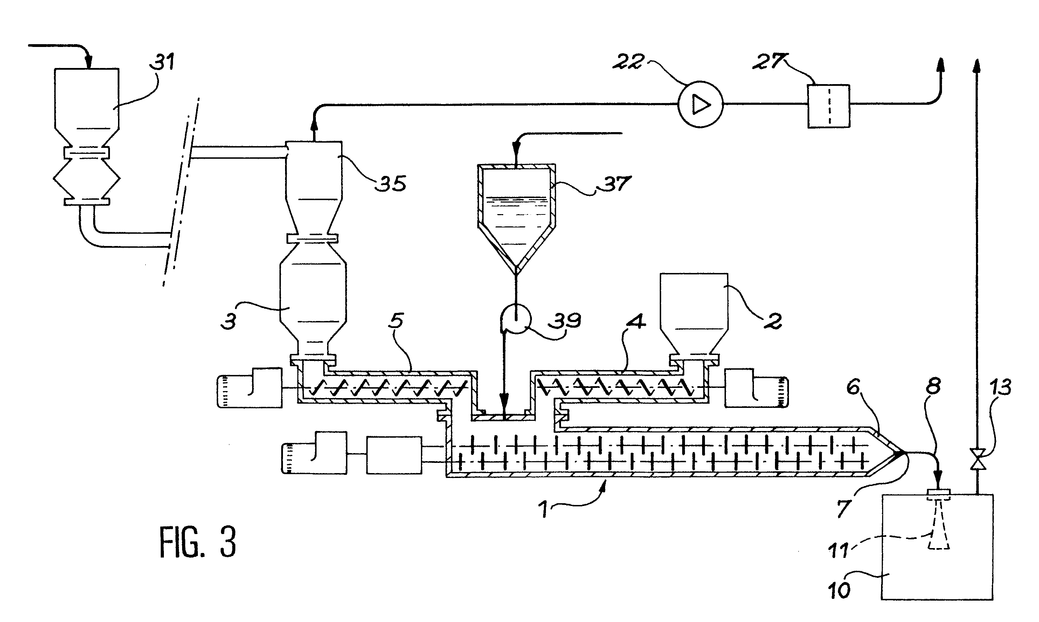

Sur la figure 3, on a représenté une installation de conditionnement de résines échangeuses d'ions et de concentrats radioactifs liquides difficiles à sécher. Sur cette figure, on a également repris les mêmes références pour désigner les éléments communs aux trois installations.

Dans cette installation, les résines échangeuses d'ions sont tout d'abord séchées dans le sécheur flash 31 pour les déshydrater sans détruire leur aptitude à reprendre de l'humidité. Elles sont récupérées ensuite dans la trémie 3 par transport pneumatique au moyen du ventilateur 22 avec séparation dans le cyclone 35. Les boues ou les concentrats radioactifs difficiles à sécher sont stockés dans un réservoir 37 et introduits dans l'extrudeuse 1 par l'intermédiaire d'une pompe doseuse 39 aussitôt après l'introduction des résines échangeuses d'ions séchées. De la sorte, l'humidité des boues ou concentrats radioactifs liquides est absorbée par les résines échangeuses d'ions séchées et le tout peut être mélangé avec la résine thermoplastique provenant de la trémie 2 par le dispositif de dosage 4.

Le procédé de l'invention permet ainsi d'enrober simultanément des boues et/ou concentrats liquides radioactifs de faible activité.

A titre d'exemple, on peut utiliser les rapports pondéraux de mélange suivants :
- déchets (résines + concentrats)/EVA = 70/30,
- résines/concentrats = 50/50.

Le procédé de l'invention peut encore s'appliquer au traitement de déchets solides de grandes dimensions faiblement actifs. Dans ce cas, ces déchets sont mis préalablement dans le conteneur de stockage et on injecte sous pression le mélange visqueux de résine thermoplastique et de déchets en particules dans le conteneur contenant ces déchets de grandes dimensions. Ceci permet d'immobiliser les déchets dans le conteneur en même temps que les autres déchets technologiques.

L'utilisation dans le procédé de l'invention d'une résine thermoplastique ayant un point de ramollissement inférieur à 100°C permet donc de réaliser le conditionnement de déchets très variés.

**Revendications**

1. Procédé de conditionnement de déchets par enrobage dans une matière thermoplastique, caractérisé en ce qu'il comprend les étapes successives suivantes :
   a) - mélange, à une température inférieure à 100°C, des déchets avec une résine thermoplastique ayant un point de ramollissement bille/anneau inférieur à 100°C de façon à obtenir un mélange visqueux, et
   b) - injection sous pression du mélange visqueux obtenu dans un conteneur de stockage.

2. Procédé selon la revendication 1, caractérisé en ce que la résine thermoplastique est un copolymère d'éthylène et d'acétate de vinyle.

3. Procédé selon la revendication 2, caractérisé en ce que le copolymère d'éthylène et d'acétate de vinyle comprend environ 28% en poids d'acétate de vinyle.

4. Procédé selon l'une quelconque des revendications 1 à 3, caractérisé en ce que la quantité de déchets présente dans le mélange obtenu à la fin de l'étape a) représente jusqu'à 80% en poids du mélange.

5. Procédé selon l'une quelconque des revendications 1 à 4, caractérisé en ce que les déchets sont des particules de résines échangeuses d'ions radioactives ayant une activité inférieure à $3,7.10^7$ $Bq/m^3$ ($10^{-3}$ $Ci/m^3$).

6. Procédé selon l'une quelconque des revendications 1 à 4, caractérisé en ce que les déchets sont des particules obtenues par broyage de déchets solides technologiques.

7. - Procédé selon l'une quelconque des revendications 1 à 4, caractérisé en ce que les déchets comprennent :
   1) des particules de résine échangeuse d'ions radioactive capables d'absorber de l'eau, et
   2) - des boues et/ou concentrats liquides radioactifs de faible activité.

8. Procédé selon la revendication 7, caractérisé en ce que la quantité en poids de boues et/ou concentrats liquides radioactifs est au plus égale à la quantité en poids de particules de résines échangeuses d'ions radioactives.

9. Procédé selon l'une quelconque des revendications 1 à 8, caractérisé en ce que le mélange est réalisé par extrusion.

FIG. 1

FIG.2

FIG. 3

EP 0 310 513 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | FR-A-2 575 943 (JGC)<br>* Revendications 1,2,3,8,9 *<br>--- | 1-7,9 | G 21 F 9/34 |
| Y | US-A-4 234 632 (LUBOWITZ)<br>* Revendications 1,6; colonne 2, lignes 6-17 *<br>--- | 1-7,9 | |
| Y | US-A-3 721 183 (DUNLEN)<br>* Revendication unique *<br>--- | 1-7,9 | |
| A | FR-A-2 358 731 (KRAFTWERK UNION)<br>* Revendications 1,2 *<br>--- | 1,7 | |
| A | FR-A-2 129 836 (CEA)<br>* Revendication 1 *<br>----- | 1 | |

### DOMAINES TECHNIQUES RECHERCHES (Int. Cl.4)

G 21 F
B 09 B

Le présent rapport a été établi pour toutes les revendications

| Lieu de la recherche | Date d'achèvement de la recherche | Examinateur |
|---|---|---|
| LA HAYE | 21-12-1988 | NICOLAS H.J.F. |

EPO FORM 1503 03.82 (P0402)